Europäisches Patentamt

European Patent Office

Office européen des brevets

(19)

(11) Veröffentlichungsnummer: **0 244 698**

**A1**

(12) # EUROPÄISCHE PATENTANMELDUNG

(21) Anmeldenummer: **87105890.5**

(22) Anmeldetag: **22.04.87**

(51) Int. Cl.4: **H01H 13/70 , G06K 11/06**

(30) Priorität: **05.05.86 DE 3615204**
**15.12.86 DE 3642780**

(43) Veröffentlichungstag der Anmeldung:
**11.11.87 Patentblatt 87/46**

(84) Benannte Vertragsstaaten:
**AT BE CH DE FR GB IT LI SE**

(71) Anmelder: **Siemens Aktiengesellschaft Berlin**
**und München**
**Wittelsbacherplatz 2**
**D-8000 München 2(DE)**

(72) Erfinder: **Gräbner, Günther, Dipl.-Ing.**
**Am Herrengarten 3**
**D-8551 Heroldsbach(DE)**
Erfinder: **Stephani, Dietrich, Dr. Dipl.-Ing.**
**Lachnerstrasse 67**
**D-8520 Erlangen(DE)**

(54) **Detektormatte und Verfahren zu ihrer Herstellung.**

(57) Die Detektormatte enthält eine Matrix aus taktilen Sensoren (2), die jeweils einen Verbundwerkstoff
mit druck-und richtungsabhängiger elektrischer
Leitfähigkeit enthalten und die mit Spaltenelektroden
(14, 15) und Zeilenelektroden (20 bis 22) versehen
sind. Erfindungsgemäß enthalten die Sensoren (2)
jeweils eine Reihenschaltung aus dem
veränderbaren Widerstand (5) des Verbundwerkstoffes (7) mit einer Kapazität (6) von vorzugsweise
wenigstens 500 pF. In dieser Matrix aus taktilen
Sensoren dient der druckabhängige Widerstand zusammen mit der zugeordneten festen Kapazität als
Meßgröße. Die Detektormatte hat durch einen geringen Abstand der Sensoren (2) eine gute Auflösung.
Sie kann in einfacher Weise dadurch hergestellt werden, daß ein Träger (26) in Dünnfilmtechnik nacheinander mit den entsprechenden Schichten versehen
wird, aus denen dann durch Strukturierung die Spaltenelektroden (14, 15) gegebenenfalls mit dem Dielektrikum (8) hergestellt werden.

FIG 1

FIG 2

## Detektormatte und Verfahren zu ihrer Herstellung

Die Erfindung bezieht sich auf eine Detektormatte mit einer Matrix aus taktilen Sensoren, die einen Verbundwerkstoff mit druck-und richtungsabhängiger elektrischer Leitfähigkeit enthalten. Die Sensoren sind zur Auswertung der Matrix mit Zeilen-und Spaltenelektroden versehen.

Es sind hochohmige Verbundwerkstoffe mit druckabhängigem Durchgangswiderstand bekannt, deren elektrische Leitfähigkeit sich mit zunehmendem Druck erhöht. Sie enthalten einen elektrisch leitenden Kunststoff, vorzugsweise Silicon-Kautschuk, mit eingelagerten, elektrisch leitenden Partikeln in feinverteilter Form und können für taktile Sensoren verwendet werden. Die Ausdehnung der Partikel beträgt im allgemeinen etwa 0,15 bis 0,2 mm und sie füllen etwa 15 bis 20 % des gesamten Volumens aus. Die druckabhängige elektrische Leitfähigkeit entsteht durch Bildung von Strompfaden durch Berührung und entsprechende Zunahme der metallischen Kontakte an den Druckstellen. Im unbelasteten Zustand hat dieser Werkstoff einen verhältnismäßig hohen Widerstand und wirkt praktisch als Isolator. Die Sensoren bilden eine Matrix mit einem Mittelabstand der Sensoren von etwa 1 mm. Diese Matrix besteht im wesentlichen aus einer Leiterplatte mit Kontaktpunktpaaren und elektrischen Leitungen. Sie ist mit einer Kunststoffabdeckung versehen, die zusammen mit einer Lochplatte für jeden Sensor eine Bohrung enthält, in der jeweils ein Kontaktstift angeordnet ist. Der Aufbau dieser Detektormatte ist somit verhältnismäßig kompliziert. Außerdem benötigt diese Detektormatte mit rein resistiver Auswertung für die einzelnen Sensoren jeweils eine Entkopplungsdiode, die ein Übersprechen begrenzen soll (ETZ, Bd. 103 (1982), Heft 10, Seiten 514 bis 517).

In einer weiteren bekannten Ausführungsform eines Arrays aus taktilen Sensoren ist eine Folie aus elektrisch leitfähigem Gummi vorgesehen, deren elektrischer Widerstand mit steigendem Druck abnimmt. Diese Gummi-Folie mit einer Dicke von etwa 25 μm ist auf einer Flachseite mit parallelen Zeilenelektroden und auf ihrer gegenüberliegenden Flachseite mit parallel zueinander angeordneten Spaltenelektroden versehen, zwischen denen streifenförmige Abstandshalter angeordnet sind. Die Kreuzungspunkte der Zeilen-und Spaltenelektroden bilden eine Matrix von Sensoren. Die Zeilen-und Spaltenleiter sind zur Auslese der Matrix vorgesehen. Die Druckabhängigkeit des Materials ist jedoch unterschiedlich über der gesamten Fläche. Die gemessenen Widerstandswerte sind somit für eine definierte Druckbelastung nicht genau reproduzierbar und man erhält somit eine entsprechend große Streuung der Meßwerte.

Zum Ausgleich dieser je nach der Wahl der belasteten Zeilen und Spalten unterschiedlichen Signale ist deshalb eine verhältnismäßig aufwendige Elektronik vorgesehen (Sensor Review, Januar 1983, Seiten 27 bis 29).

Der Erfindung liegt nun die Aufgabe zugrunde, diese bekannte Sensormatrix zu vereinfachen und zu verbessern, insbesondere soll der Aufbau vereinfacht werden und das Meßsignal über der gesamten Fläche wenigstens annähernd unabhängig gemacht werden von einer Streuung der Widerstandswerte. Außerdem soll der Aufwand für die Steuerelektronik vermindert werden.

Diese Aufgabe wird erfindungsgemäß gelöst mit den kennzeichnenden Merkmalen des Anspruchs 1. In der gesamten Matrix erhält man einen Ausgleich der Streuung der veränderbaren Widerstände durch die mit jedem Widerstand der einzelnen Sensoren in Reihe geschaltete Kapazität und das Meßsignal wird somit in weitem Bereich unabhängig vom Durchlaßwiderstand des Verbundmaterials. Die Kapazität des Dielektrikums bleibt bei Druckbelastung praktisch unverändert und der - schwankende Widerstand hat auf das Meßergebnis nur einen geringen Einfluß. Die Dicke und das Material des Dielektrikums werden so gewählt, daß die Kapazität einen vorbestimmten Grenzwert von etwa 10 pF nicht wesentlich unterschreitet und vorzugsweise wesentlich mehr als 50 pF, insbesondere wenigstens 500 pF, beträgt.

Wird ein Dielektrikum mit einer hohen Dielektrizitätskonstante $\epsilon_r$ von wenigstens 1000 gewählt, so kann damit auf verhältnismäßig engem Raum eine hohe Kapazität realisiert werden; diese Reaktanz wirkt sich wesentlich auf das Meßergebnis aus. Als Dielektrikum kann beispielsweise ein Keramikkörper vorgesehen sein, dessen den Zeilen-bzw. Spaltenelektroden zugewandten Oberflächen beispielsweise jeweils mit einer Metallisierung versehen sein können. Die zwischen den Kapazitäten und Widerständen angeordneten Metallisierungen können vorzugsweise jeweils durch eine Nut aufgetrennt werden. Das Dielektrikum wird dann mit seiner Metallisierung in Streifen aufgetrennt und auf einem Träger befestigt. Diese Metallstreifen bilden dann die Spaltenelektroden.

In einem besonders vorteilhaften Verfahren zum Herstellen der Detektormatte wird der Träger mit den Zeilen-oder .Spaltenelektroden sowie dem entsprechend streifenförmigen Dielektrikum als gemeinsame Baueinheit hergestellt. Das Material für die Elektroden und das Dielektrikum werden als Auflagen in Dünnfilmtechnik auf den Träger aufgebracht und anschließend werden die streifenförmigen Elektroden mit dem zugeordneten Dielektrikum durch Photolithographie aus den Auflagen herausgearbeitet. In dieser Ausführungsform kann ein Dielektrikum mit einer verhältnismäßig geringen Dielektrizitätskonstante gewählt werden, da man mit der sehr geringen Dicke des Dielektrikums, die wenige $\mu$m nicht wesentlich überschreitet und insbesondere wesentlich weniger als 1 $\mu$m betragen kann, eine entsprechend hohe Kapazität erhält.

Die oberen Zeilenelektroden, die im allgemeinen rechtwinklig zu den unteren Spaltenelektroden angeordnet sind, können vorzugsweise an einer Abdeckung aus einem Kunststoff mit hoher mechanischer Festigkeit befestigt sein, die auf den Verbundwerkstoff nur aufgelegt wird. Zwischen den Zeilenelektroden und dem zugeordneten veränderbaren Widerstand der Sensoren besteht dann eine kraftschlüssige Verbindung.

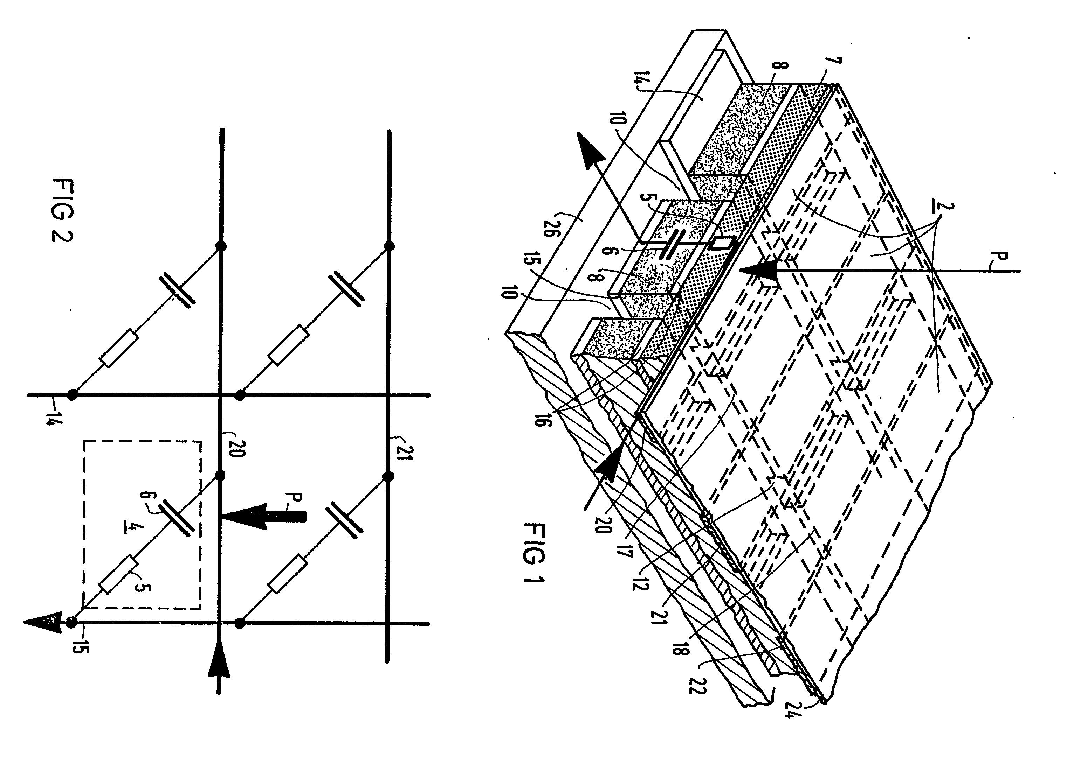

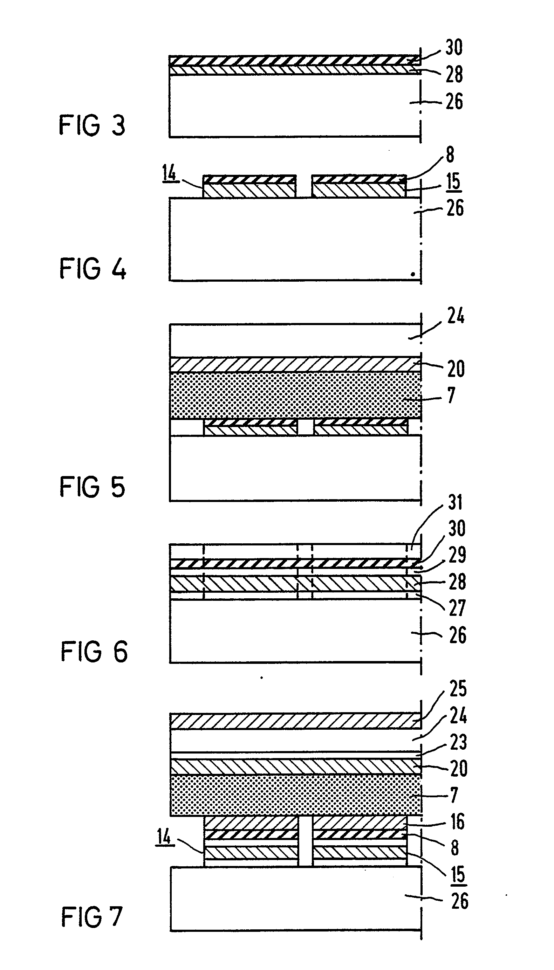

Zur weiteren Erläuterung der Erfindung wird auf die Zeichnung Bezug genommen, in deren Figur 1 ein Ausführungsbeispiel einer Detektormatte gemäß der Erfindung schematisch veranschaulicht ist. Figur 2 zeigt ein Ersatzschaltbild eines Teils der Anordnung gemäß Figur 1. Die Figuren 3 bis 6 dienen zur Erläuterung eines besonders vorteilhaften Herstellungsverfahrens und in Figur 7 ist eine fertige Ausführungsform schematisch veranschaulicht.

In der Darstellung gemäß Figur 1 enthält eine Detektormatte eine Matrix aus taktilen Sensoren 2, die jeweils eine Reihenschaltung 4 aus einem durch Druck veränderbaren Widerstand 5 mit einer Kapazität 6 enthalten. Der veränderbare Widerstand 5 wird gebildet aus dem jeweils einen der Sensoren zugeordneten Teil einer Folie mit einer Dicke von beispielsweise etwa 0,5 mm aus einem Verbundwerkstoff 7 mit druckabhängiger elektrischer Leitfähigkeit. In Richtung einer durch einen Pfeil P angedeuteten Druckbelastung ist mit dem veränderbaren Widerstand 5 des Verbundwerkstoffes 7 die Kapazität 6 eines Dielektrikums 8 in Reihe geschaltet.

Die Kapazität 6 kann in einer Ausführungsform gebildet werden durch einen Keramikkörper, der beispielsweise aus Bariumtitanat BaTiO$_3$ mit einer hohen Dielektrizitätskonstante $\epsilon_r$ von vorzugsweise wenigstens 3000 und einer Dicke von beispielsweise etwa 0,5 mm bestehen kann, dessen untere Flachseite mit einer Metallisierung versehen ist. Der Keramikkörper ist durch Längs nuten aufgeteilt, von denen in der Figur nur zwei sichtbar und mit 10 bezeichnet sind. Durch diese Längsnuten 10 entstehen an der unteren Flachseite streifenförmige Elektroden, die jeweils eine Spaltenelektrode 14 bzw. 15 bilden und denen jeweils ein entsprechend streifenförmiges Dielektrikum 8 zugeordnet ist.

Unter Umständen kann es zweckmäßig sein, den Keramikkörper auch auf seiner oberen Flachseite mit einer Metallisierung zu versehen. In diesem Falle wird diese Metallisierung durch Quernuten 12 jeweils in eine metallische Zwischenlage 16 bis 18 für jeden der Sensoren 2 aufgetrennt. Diese metallischen Zwischenlagen 16 bis 18 wirken als elektrische Äquipotentialflächen, d.h. sobald eine der Teilflächen berührt wird, wirkt die gesamte Elektrodenfläche.

Eine Abdeckung 24 aus Kunststoff ist an ihrer unteren Flachseite mit streifenförmigen Elektroden versehen, die mit den Spaltenelektroden 14 und 15 jeweils einen Winkel, vorzugsweise einen rechten Winkel, bilden und als Zeilenelektroden 20 bis 22 dienen. Diese Abdeckung 24 der Detektormatte besteht aus einem Kunststoff hoher Zugfestigkeit, vorzugsweise einem thermostabilen Polyimid (Capton). Zwischen den Zeilenelektroden 20 bis 22 und den Spaltenelektroden 14 und 15 entsteht durch die Reihenschaltung der veränderbaren Widerstände 5 mit der wenigstens annähernd konstanten Kapazität 6 jeweils einer der Sensoren 2. Mit einer Breite der Zeilenelektroden 20 bis 22 von beispielsweise etwa 0,5 mm und einer Breite der Spaltenelektroden 14 und 15 von jeweils ebenfalls etwa 0,5 mm sowie einer Breite der Längsnuten 10 und der Quernuten 12 von beispielsweise ebenfalls etwa 0,5 mm entsteht eine Matrix von Sensoren 2 mit einem Raster von etwa 1 mm und einer entsprechend guten Auflösung der gesamten Detektormatte. Es kann beispielsweise über die Zeilenelektrode 20 ein Signal eingelesen und über die Spaltenelektrode 14 ausgelesen werden, wie es in der Figur durch nicht näher bezeichnete Pfeile angedeutet ist.

Die Spaltenelektroden 14 und 15 sind auf einem Träger 26 befestigt, dessen Dielektrizitätskonstante vorzugsweise wesentlich geringer ist als die Dielektrizitätskonstante des Dielektrikums 8. Geeignet ist beispielsweise ein Träger 26 aus Kunststoff, vorzugsweise Tetrafluorethylen (Teflon) oder auch Polymethylmethacrylat (Plexiglas).

Die gesamte Detektormatte kann vorzugsweise noch mit einer in der Figur nicht dargestellten Kappe versehen sein, die zugleich als Puffer für mechanische Stoßbelastung der Matte dient. Diese Wirkung als Stoßdämpfer wird zugleich unterstützt durch den elastischen Verbundwerkstoff 7. Die Zeilenelektroden 20 bis 22 bestehen aus Metall, vorzugsweise Gold, mit einer Dicke von beispielsweise etwa 20 bis 40 $\mu$m, und werden im allgemeinen auf eine besondere Haftschicht aufgedampft oder aufgesputtert, die beispielsweise wenigstens im wesentlichen aus Chrom bestehen kann. Die Ankopplung der Zeilenelektroden 20 bis 22 erfolgt über den Verbundwerkstoff 7.

In einer besonderen Ausführungsform der Detektormatte wird die Abdeckung 24 an ihrer oberen Flachseite mit einer Metallisierung versehen, die auf Massepotential gelegt wird und dadurch als Abschirmung wirksam ist.

Mit beispielsweise 16 Zeilenleitern 20 bis 22 und 32 Spaltenleitern 14 und 15 und einem Raster der Sensoren 2 von beispielsweise etwa 1 mm erhält man eine empfindliche Detektormatte mit 512 Sensoren 2, deren Schaltschwelle in der dargestellten Ausführungsform beispielsweise bei etwa 0,05 N/pixel liegen kann.

Im Ersatzschaltbild gemäß Figur 2 sind lediglich die Spaltenelektroden 14 und 15 und die Zeilenelektroden 20 und 21 schematisch angedeutet, die in jedem ihrer nicht näher bezeichneten Kreuzungspunkte einen der Sensoren 2 bilden, die jeweils eine Reihenschaltung 4 des veränderbaren Widerstandes 5 mit der Kapazität 6 enthalten. Im unbelasteten Zustand der Detektormatte kann der Widerstand des Verbundwerkstoffes 7 in jeden der Sensoren 2 beispielsweise etwa 10 Megohm betragen und somit praktisch als Isolator wirken. Das Dielektrikum 8 wird so bemessen, daß in jedem der Sensoren 2 eine Kapazität von wenigstens 10 pF, vorzugsweise wenigstens 50 pF und insbesondere wenigstens 500 pF, entsteht. Im unbelasteten Zustand fließt über die Sensoren 2 praktisch kein Strom. Wird die Reihenschaltung 4 mit dem Widerstand 5 und der Kapazität 6 mit der Kraft P belastet, so vermindert sich der Wert des Widerstandes 5 auf höchstens etwa noch 1 kOhm, vorzugsweise weniger als 0,1 kOhm, und es entsteht ein Signal, das bei Einspeisung über die Zeilenelektrode 20 an der Spaltenelektrode 15 abgenommen werden kann. In dieser Anordnung überwiegt wesentlich der kapazitive Effekt, so daß eine Auslegung der in der Figur nicht dargestellten Außenbeschaltung wie bei einer rein kapazitiven Schaltung möglich ist, solange der Betrag der Reaktanz deutlich größer ist als der Widerstand des belasteten Verbundwerkstoffes 7.

Bei einem besonders einfachen Verfahren zum Herstellen der Detektormatte wird auf dem Träger 26 eine als Leiterschicht 28 dienende Metallschicht mit einer Dicke von vorzugsweise höchstens 1000 nm, insbesondere höchstens 200 nm, in Dünnfilmtechnik aufgebracht, die aus Nickel, Gold oder Silber, vorzugsweise aus Kupfer, bestehen kann. Aus dieser Leiterschicht 28 werden dann durch Mikrostrukturtechnik, beispielsweise durch Photolithographie, Längsnuten herausgearbeitet und dadurch streifenförmige Bereiche gebildet, die als Spaltenelektroden wirken. Diese Spaltenelektroden werden dann mit einer als Dielektrikum wirkenden Auflage in Dünnfilmtechnik versehen.

In einem bevorzugten Verfahren wird gemäß Figur 3 auf die Leiterschicht 28 eine als Dielektrikum dienende Schicht 30 ebenfalls in Dünnfilmtechnik aufgebracht, deren Material und Dicke so gewählt werden, daß eine möglichst hohe Kapazität entsteht. Diese Schicht 30 kann aus Keramik, beispielsweise Aluminiumoxid $Al_2O_3$ oder auch aus Titanoxid $TiO_2$ bestehen, deren Dielektrizitätskonstante maximal etwa 50 beträgt. Die Dicke dieser Titanoxidschicht kann vorzugsweise höchstens 1000 nm, insbesondere höchstens 500 nm, betragen. Die als Dielektrikum vorgesehene Schicht 30 kann vorzugsweise aus Siliziumoxid $SiO$ oder $SiO_2$ mit sehr geringer Dicke von vorzugsweise höchstens etwa 300 nm, insbesondere höchstens 100 nm, bestehen, das sich in Dünnfilmtechnik besonders einfach aufbringen läßt. Das Dielektrikum muß somit geeignet sein zum Aufbringen in Dünnfilmtechnik und sich außerdem durch Verfahren der Mikrostrukturtechnik bearbeiten lassen.

Aus den Auflagen des so vorbereiteten Trägers 26 werden dann gemäß Figur 4 durch Mikrostrukturtechnik, beispielsweise durch Photolithographie, die Längsnuten 10 herausgearbeitet und dadurch streifenförmige Bereiche gebildet, die jeweils als Spaltenelektroden 14 und 15 wirken und denen jeweils ein in gleicher Weise streifenförmig gestaltetes, sehr dünnes Dielektrikum 8 zugeordnet ist. Es wird somit zunächst eine gemeinsame Baueinheit gebildet aus dem Substrat 26, den Spaltenelektroden 14 und 15 sowie dem Dielektrikum 8.

Auf dieses Dielektrikum 8 wird dann gemäß Figur 5 wie in der Ausführungsform gemäß Figur 1 der Verbundwerkstoff 7 aufgelegt, an dessen oberer Flachseite die Zeilenelektroden 20 wirksam sind, die vorzugsweise an der unteren Flachseite der Abdeckung 24 angeordnet sein können.

Zum Herstellen einer besonders vorteilhaften Ausführungsform gemäß Figur 6 wird auf das Substrat 26 zunächst eine als Haftschicht 27 dienende Metallschicht mit einer Dicke von vorzugsweise höchstens 50 nm in Dünnfilmtechnik aufgebracht, vorzugsweise aufgesputtert oder aufgedampft, die beispielsweise aus Chrom, vorzugsweise aus Titan, bestehen kann. Auf diese Haftschicht 27 wird die elektrische Leiterschicht 28 aufgebracht, die dann vorzugsweise nochmals mit einer Haftschicht 29 versehen wird. Diese Haftschicht 29 wird dann mit der Schicht 30 für das Dielektrikum versehen. Unter Umständen kann es zweckmäßig sein, die als Dielektrikum vorgesehene Schicht 30 nochmals mit einer dünnen Metallauflage 31 zu versehen. Diese Metallschicht 31 wird dann durch Mikrostrukturierung aufgetrennt, wie es in der Figur gestrichelt angedeutet ist. In der Ausführungsform gemäß Figur 7 wird dann die gemäß Figur 6 gebildete Baueinheit aus dem Substrat 26, den Spaltenelektroden 14 und 15 und dem Dielektrikum 8 mit der Abdeckung 24 versehen, die an ihrer unteren Flachseite mit den Zeilenelektroden 20 und auf ihrer oberen Flachseite mit einer metallischen Abschirmung 25 versehen ist. Für die Zeilenelektroden 20 kann vorzugsweise ebenfalls eine Haftschicht 23 vorgesehen sein, die beispielsweise aus Chrom bestehen kann. Die einzelnen metallischen Bereiche 16 wirken in der Detektormatte zwischen dem Dielektrikum 8 und dem Verbundwerkstoff 7 als elektrische Äquipotentialflächen.

**Ansprüche**

1. Detektormatte mit einer Matrix aus taktilen Sensoren (2), die einen Verbundwerkstoff (7) mit druck-und richtungsabhängiger elektrischer Leitfähigkeit enthalten und die mit Spaltenelektroden (14, 15) und Zeilenelektroden (20 bis 22) versehen sind, **dadurch gekennzeichnet,** daß die Sensoren (2) jeweils eine Reihenschaltung (4) aus dem veränderbaren Widerstand (5) des Verbundwerkstoffes (7) mit einer Kapazität (6) von wenigstens 50 pF eines Dielektrikums (8) enthalten (Figur 1).

2. Detektormatte nach Anspruch 1 **dadurch gekennzeichnet,** daß die Kapazität wenigstens 500 pF beträgt.

3. Detektormatte nach Anspruch 1 oder 2, **dadurch gekennzeichnet,** daß ein Dielektrikum (8) mit einer Dielektrizitätskonstante $\epsilon_r$ von mindestens 1000, vorzugsweise mindestens 3000, vorgesehen ist.

4. Detektormatte nach Anspruch 3, **dadurch gekennzeichnet,** daß als Dielektrikum (8) streifenförmige Keramikkörper vorgesehen sind, die zwischen den Spaltenelektroden (14, 15) und dem Verbundwerkstoff (7) angeordnet sind.

5. Detektormatte nach einem der Ansprüche 1 bis 4, **dadurch gekennzeichnet,** daß durch mechanische Auftrennung aus der Metallisierung einer der Flachseiten des Dielektrikums (8) Zeilen- oder Spaltenleiter gebildet sind.

6. Detektormatte nach einem der Ansprüche 1 bis 5, **dadurch gekennzeichnet,** daß durch mechanische Auftrennung aus der Metallisierung der gegenüberliegenden Flachseite des Dielektrikums (8) streifenförmige metallische Zwischenlagen (16 bis 18) zwischen dem Verbundwerkstoff (7) und dem zugeordneten Dielektrikum (8) der einzelnen Sensoren (2) gebildet sind.

7. Detektormatte nach einem der Ansprüche 1 bis 6, **dadurch gekennzeichnet,** daß eine elektrisch isolierende Abdeckung (24) vorgesehen ist, die an ihrer dem Verbundwerkstoff (7) zugewandten Flachseite mit streifenförmigen Zeilenelektroden (20 bis 22) versehen ist.

8. Detektormatte nach Anspruch 7, **dadurch gekennzeichnet,** daß die Abdeckung (24) an ihrer vom Verbundwerkstoff (7) abgewandten Flachseite mit einer als Abschirmung dienenden Metallisierung versehen ist.

9. Verfahren zum Herstellen einer Detektormatte nach Anspruch 1 oder 2, **gekennzeichnet** durch folgende Merkmale:

a) auf einem Träger (26) wird eine als elektrische Leiterschicht (28) dienende Metallschicht in Dünnfilmtechnik aufgebracht;

b) aus der Leiterschicht (28) werden durch Strukturierung Nuten herausgearbeitet und damit Spaltenelektroden (14, 15) gebildet;

c) auf diese so vorbereitete Baueinheit wird eine als Dielektrikum dienende Schicht (29) in Dünnfilmtechnik aufgebracht;

d) die aus dem Träger (26) mit den streifenförmigen Elektroden (14, 15) und dem Dielektrikum (8) gebildete Baueinheit wird mit dem Verbundwerkstoff (7) abgedeckt;

e) eine elektrisch isolierende Abdeckung (24) wird an einer Flachseite mit Zeilenelektroden (20 bis 22) versehen und dann mit dieser Flachseite auf den Verbundwerkstoff (7) aufgelegt.

10. Verfahren nach Anspruch 9, **gekennzeichnet** durch folgende Merkmale:

a) auf die Leiterschicht (28) wird zunächst eine als Dielektrikum dienende Schicht (29) in Dünnfilmtechnik aufgebracht;

b) aus diesen Auflagen des Trägers (26) werden durch Strukturierung Nuten (10) herausgearbeitet und damit Spaltenelektroden (14, 15) mit jeweils einem entsprechend streifenförmigen Dielektrikum (8) gebildet (Figuren 3 und 4).

11. Verfahren nach Anspruch 10, **dadurch gekennzeichnet,** daß

a) die Schicht (29) für das Dielektrikum (8) mit einer Metallauflage (30) versehen wird und

b) diese Auflagen des Trägers (26) durch Strukturierung in Streifen aufgetrennt werden (Figuren 6 und 7).

12. Verfahren nach einem der Ansprüche 9 bis 11, **dadurch gekennzeichnet,** daß der Träger (26) vor dem Aufbringen der Leiterschicht (28) zunächst mit einer ersten elektrisch leitenden Haftschicht (27) versehen wird (Fig. 6).

13. Verfahren nach Anspruch 12, **dadurch gekennzeichnet,** daß die erste Haftschicht (27) aufgesputtert oder aufgedampft wird.

14. Verfahren nach Anspruch 12 oder 13, **dadurch gekennzeichnet,** daß als erste Haftschicht (27) Titan oder Chrom aufgebracht wird.

15. Verfahren nach einem der Ansprüche 12 bis 14, **dadurch gekennzeichnet,** daß die erste Haftschicht mit einer Dicke von höchstens 50 nm aufgebracht wird.

16. Verfahren nach einem der Ansprüche 9 bis 11, **dadurch gekennzeichnet,** daß vor dem Aufbringen der Schicht (29) für das Dielektrikum (8) auf die Leiterschicht (28) eine zweite elektrisch leitende Haftschicht aufgebracht wird (Figur 6).

17. Verfahren nach einem der Ansprüche 10 bis 16, **dadurch gekennzeichnet,** daß als Leiterschicht (28) Kupfer aufgebracht wird.

18. Verfahren nach einem der Ansprüche 10 bis 17, **dadurch gekennzeichnet,** daß eine Leiterschicht (28) mit einer Dicke von höchstens 1 μm aufgebracht wird.

19. Verfahren nach einem der Ansprüche 10 bis 18, **dadurch gekennzeichnet,** daß eine Schicht (29) für das Dielektrikum (8) aus Titanoxid $TiO_2$ aufgebracht wird.

20. Verfahren nach Anspruch 19, **dadurch gekennzeichnet,** daß Titanoxid $TiO_2$ mit einer Dicke von höchstens 500 nm aufgebracht wird.

21. Verfahren nach einem der Ansprüche 10 bis 18, **dadurch gekennzeichnet,** daß eine Schicht (29) für das Dielektrikum aus Siliziumoxid SiO aufgebracht wird.

22. Verfahren nach Anspruch 21, **dadurch gekennzeichnet,** daß Siliziumoxid SiO mit einer Dicke von höchstens 100 nm aufgebracht wird.

FIG 1

FIG 2

FIG 3

— 30
— 28
— 26

FIG 4

14

8
15
26

FIG 5

24
20
7

FIG 6

31
30
29
28
27
26

FIG 7

25
24
23
20
7
16
8
15
26

14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 511 796 (INTERACTION SYSTEMS) <br> * Seite 3, Zeile 13 - Seite 4, Zeile 6 * | 1 | H 01 H 13/70 <br> G 06 K 11/06 |
| A | US-A-3 676 607 (BELL) <br> * Spalte 4, Zeilen 11-65 * | 1 | |
| A | EP-A-0 069 190 (BRADY) <br> * Seite 1, Zeilen 8-20 * | 1 | |
| A | FR-A-2 204 315 (OLIVETTI) <br> * Seite 5, Zeilen 12-33 * | 1 | |
| D,A | ETZ, Band 103, Nr. 10, 1982, Seiten 514-517, DE; A. GAIROLA: "Handhabungstechnik mit taktilen Sensoren" <br> * Seite 515 * | 1 | |

| RECHERCHIERTE SACHGEBIETE (Int. Cl.4) |
|---|
| H 01 H 13/70 <br> H 03 K 17/96 <br> G 06 K 11/06 <br> G 01 L 1/70 <br> G 01 B 7/00 |

Der vorliegende Recherchenbericht wurde für alle Patentansprüche erstellt.

| Recherchenort | Abschlußdatum der Recherche | Prüfer |
|---|---|---|
| DEN HAAG | 12-08-1987 | LIBBERECHT L.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82